# EUROPEAN PATENT SPECIFICATION

(11) **EP 4 144 651 B1**
(45) Date of publication and mention of the grant of the patent: **29.10.2025**
(21) Application number: 21382790.0
(22) Date of filing: 01.09.2021
(51) Int. Cl.: B64D 39/00, G05D 1/00

(54) **SYSTEM AND METHOD FOR AUTONOMOUS AIR-TO-AIR REFUELLING OF AN AIRCRAFT**
SYSTEM UND VERFAHREN ZUR AUTONOMEN LUFT-LUFT-BETANKUNG EINES FLUGZEUGS
SYSTÈME ET PROCÉDÉ DE RAVITAILLEMENT AIR-AIR AUTONOME D'UN AÉRONEF

(43) Date of publication of application: 08.03.2023
(73) Proprietor: Airbus Defence and Space S.A.U., 28906 Getafe, Madrid (ES)
(72) Inventor: TEJELO MANZANO, Alfonso, Madrid (ES)
(74) Representative: Elzaburu S.L.P.

(56) References cited:
- US-A- 5 326 052
- US-A1- 2012 059 536
- US-A1- 2014 358 335
- US-A1- 2018 016 026
- US-A1- 2018 164 436
- US-A1- 2021 080 585

## Description

### FIELD OF THE INVENTION

The present invention relates to a system and a method for air-to-air refuelling of an aircraft during the different stages of air-to-air refuelling operation.

### BACKGROUND OF THE INVENTION

Air-to-air refuelling systems perform the transfer of fuel from a tanker aircraft to a receiver aircraft coupling dispensing means located in the tanker aircraft and receiving means located in the receiver aircraft.

It is known a dispensing and receiving means known as flying boom comprising a hose passing through a rigid telescopic pipe, the boom. The boom is fixed to a rear portion of the fuselage of the tanker aircraft. The boom is inserted into a receptacle in the receiver aircraft.

A different refuelling method comprising different dispensing and receiving means known as hose-and-drogue comprises a flexible hose that trails from the tanker aircraft having a terminal portion called a drogue configured for contacting a probe on the receiver aircraft. The drogue stabilizes the hose in flight and provides a funnel to aid insertion of the receiver aircraft probe into the hose. A probe, which is a rigid, protruding or pivoted retractable arm placed on the aircraft's nose or fuselage to make the connection.

In both cases, the receiver aircraft must first carry out a correct approach to the tanker aircraft, keeping an appropriate distance and then maintain its position and speed with respect to the tanker aircraft.

The operation of approach of the receiver aircraft to the area for refuelling, known as rendezvous area or precontact area, is executed by the pilot of the receiver aircraft.

Afterwards, the fine approach for contact and engagement from astern between the dispensing means located in the tanker aircraft and the receiving means located in the receiver aircraft has to be performed. An active intervention of the pilot of the receiver aircraft is needed in the pre contact and contact phase and during dispensing phase in maintaining the position of the receiver aircraft stable with respect to that of the tanker aircraft in addition to control and monitoring the proper function of fuel system once in contact.

Air-to-Air refuelling field is interested in refuelling an aircraft without a human at the controls, either on tanker and/or receiver aircraft.

Known solutions to Automated Air-to-Air refuelling are focused on the relative positioning of the tanker aircraft versus the receiver aircraft. For that purpose, the tanker aircraft and the receiver aircraft need to fit specific equipment that permits a stable control of receiver aircraft positioning during the critical phases of inflight refuelling, i.e., precontact, contact, fuel dispensing and disconnection. For instance, camera image processing computers, probe versus drogue position sensors, standardized command and control messages from tanker aircraft to receiver aircraft, etc.

In case a fully autonomous control of the whole refuelling operation is desired with current solutions, both tanker aircraft and receiver aircraft shall install dedicated equipment to permit the transmission of necessary parameters related to tanker dispense equipment availability, relative position between both tanker and receiver and permission to start/stop the operation. This will limit automated refuelling operations to certain couples of tanker aircraft versus receiver aircraft that will both need to fit the required equipment.

It is known document US2018016026 disclosing a system and method for refueling an aircraft during flight. A sensor measures a spatial parameter of a probe of the aircraft and of a drogue that provides fuel. A processor predicts a relative position of the probe and drogue from the spatial parameter, calculates a flight trajectory that mates the probe with the drogue based on the predicted relative position of the probe and drogue, and provides a command to the flight control system to fly the aircraft along the flight trajectory to mate the probe with the drogue. When the probe is mated to the drogue, the aircraft is refueled via the connection.

US 2012/059536 A1 discloses a system and a method of automatic piloting for in-flight refuelling of aircraft and an aircraft comprising said system.

### SUMMARY OF THE INVENTION

It is the object of the present invention a system and a method for autonomous air-to-air refuelling of an aircraft during the different stages of air-to-air refuelling operation.

The claimed system is configured for being fully arranged on a receiver aircraft adapted to be refuelled by a tanker aircraft.

As previously stated, the receiver aircraft comprises a fuel receiving equipment and the tanker aircraft comprises a fuel dispensing equipment. The fuel receiving equipment is configured for receiving fuel from the fuel dispensing equipment.

The system for autonomous air-to-air refuelling of an aircraft during the different stages of air-to-air refuelling operation comprises:
- A vision system configured for being arranged on the receiver aircraft and configured for capturing images of at least a portion of the receiver aircraft comprising the fuel receiving equipment and at least a portion of the tanker aircraft comprising the dispensing equipment. Therefore, the vision system is able to capture images of the receiving equipment, the dispensing equipment and at least a portion of the receiver and the tanker aircraft.
- An image processing system arranged on the receiver aircraft and configured for receiving the images captured by the vision system. The image processing system is configured for processing the captured images to identify the shape of the fuel receiving equipment and of the fuel dispensing equipment and at least the contour of a portion of the tanker aircraft. The image processing system is also configured to calculate the distance, in an appropriate coordinates system, for instance, a cartesian coordinate system, between the fuel dispensing equipment and the fuel receiving equipment and the relative attitude of the tanker aircraft with respect to the receiver aircraft.

The image processing system is configured to identify the shape, i.e., the spatial form of the main elements of the equipment. For instance, the external contour of the equipment and the contour and location of the coupling area. For the tanker aircraft, the system is configured to identify at least the contour, i.e., the outline or line that marks the outer limits of the tanker aircraft.

The image processing system is also configured to calculate the relative attitude of the tanker aircraft with respect to the receiver aircraft. The relative attitude is the orientation in space of the tanker aircraft with respect to the receiver aircraft.

Object orientation in aviation uses three angles:
- yaw (around the yaw axis)
- pitch (around the lateral axis)
- roll or bank (around the longitudinal axis).

- A receiver aircraft positioning system in communication with the image processing system. The positioning system is configured for varying, based on the distance between the fuel receiving equipment and the fuel dispensing equipment and the relative attitude of the tanker aircraft, flight parameters of the receiver aircraft for approaching and aligning the receiver aircraft with the tanker aircraft so that the fuel dispensing equipment and the fuel receiving equipment make contact, maintain contact or disconnect for performing a refuelling operation.

Thus, the receiver aircraft approaches, i.e., comes very near to the tanker aircraft and the receiver aircraft corrects its relative position with respect to the tanker aircraft so that the dispensing and receiving equipment are able to make and maintain contact or disconnect.

The object of the invention is to allow the full autonomous control of the air-to-air refuelling operation independently from the tanker aircraft by fitting on the receiver aircraft a dedicated control and monitoring system that identifies the tanker attitude and relative distance between the fuel receiving equipment and the fuel dispensing equipment. For instance, it identifies the distance in an appropriate coordinate system between the probe or receptacle versus the tanker dispense equipment drogue or boom mast nozzle.

In addition to receiver aircraft positioning, the system may be capable to autonomously control receiver fuel system by opening and closing the necessary valves to reach desired fuel on board target.

The claimed system performs an interface with the receiver aircraft flight Control, Guidance and Flight Management Systems permitting to send necessary commands to control flight control surfaces, vertical and lateral degrees of freedom, and engine thrust, longitudinal degree of freedom, as required by tanker aircraft versus receiver aircraft position image control loop during each air-to-air refuelling phase.

The advantage of identifying the contour of at least a portion of the tanker aircraft and its attitude is that, when contact is performed, it is possible to control if the receiver aircraft is dragging the dispensing means too far up/down or right/left with respect to the tanker aircraft and an undesired disconnection may occur. Also, having the information about tanker's attitude would allow to make contact in a turn which is a normal scenario during refuelling operations.

Additionally, the system may be capable of recognizing dispense equipment signal lights or Pilot Director Lights (PDLs), hose refuelling marks or boom telescopic beam marks, permitting to enable and to control the contact position between tanker and receiver within a refuelling range. The system will be capable to recognize either of the previously mentioned items depending on the receiver aircraft fitting a probe or a receptacle respectively.

The system may also allow to autonomously control the opening/closure of receiver fuel system based on image processing from the vision system installed on the receiver aircraft.

It is also an object of the invention a receiver aircraft that comprises a system for autonomous air-to-air refuelling of an aircraft during the different stages of air-to-air refuelling operation according to the above mentioned.

Additionally, the main advantages of the invention are listed as follows:
- Independency from tanker aircraft. Current autonomous air-to-air refuelling solutions rely on a joint data transmission system than needs to install dedicated equipment on both the tanker aircraft and receiver aircraft.
- Applicability in drones or unmanned aerial vehicles (UAV) to allow a full autonomous air-to-air refuelling operation, without a human on the loop, that will extend the operational range.
- To perform air-to-air refuelling on silent communications, in day and night conditions.
- The claimed system could be integrated on existing aircraft fitting refuelling probe or receptacle.
- For manned aircraft, it will significantly lower the workload during air-to-air refuelling operations increasing the safety margins as crew will only monitor that the air-to-air refuelling operation develops as expected.

It is also an object of the invention a method for autonomous air-to-air refuelling of an aircraft during the different stages of air-to-air refuelling operation comprising the following steps:
- capturing images by a vision system arranged on the receiver aircraft of at least a portion of the receiver aircraft comprising the fuel receiving equipment and at least a portion of the tanker aircraft comprising the dispensing equipment,
- sending the captured images to an image processing system arranged on the receiver aircraft,
- processing the received captured images by the image processing system identifying the shape of the fuel receiving equipment and of the fuel dispensing equipment and the contour of at least a portion of the tanker aircraft and calculating the distance between the fuel dispensing equipment and the fuel receiving equipment and the relative attitude of the tanker aircraft with respect to the receiver aircraft,
- varying, based on the distance between the fuel receiving equipment and the fuel dispensing equipment and the relative attitude of the tanker aircraft, flight parameters of the receiver aircraft by a receiver aircraft positioning system in communication with the image processing system for approaching and aligning the receiver aircraft with the tanker aircraft so that the fuel dispensing equipment and the fuel receiving equipment make contact, maintain contact or disconnect for performing a refuelling operation.

### DESCRIPTION OF THE FIGURES

To complete the description and to provide for a better understanding of the invention, a set of drawings is provided. Said drawings form an integral part of the description and illustrate preferred embodiments of the invention. The drawings comprise the following figures.
Figure 1 shows a schematic view of an embodiment of a camera and the identification system in an alignment phase.
Figure 2 shows a schematic view of an embodiment of a camera and the identification system in a dispensing phase.
Figure 3 shows a schematic view of an embodiment of visual signals indicating that the receiver aircraft is located in an optimum refuelling zone with respect to the tanker aircraft.
Figure 4 shows a schematic perspective view of an embodiment of a tanker aircraft showing Pilot Director Lights.

### DETAILED DESCRIPTION OF THE INVENTION

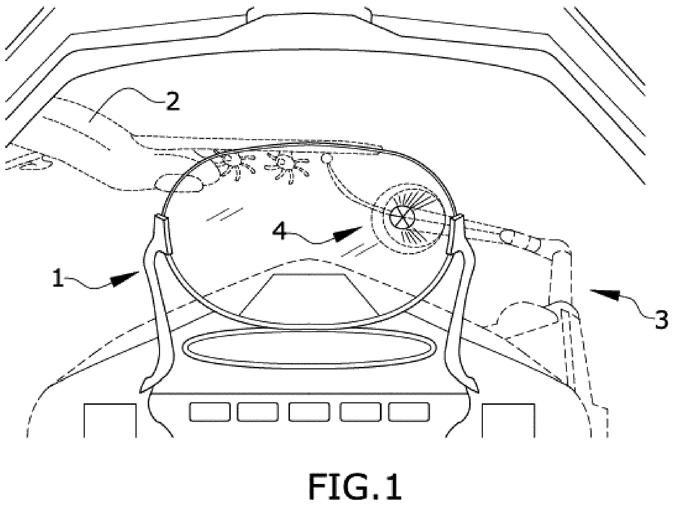

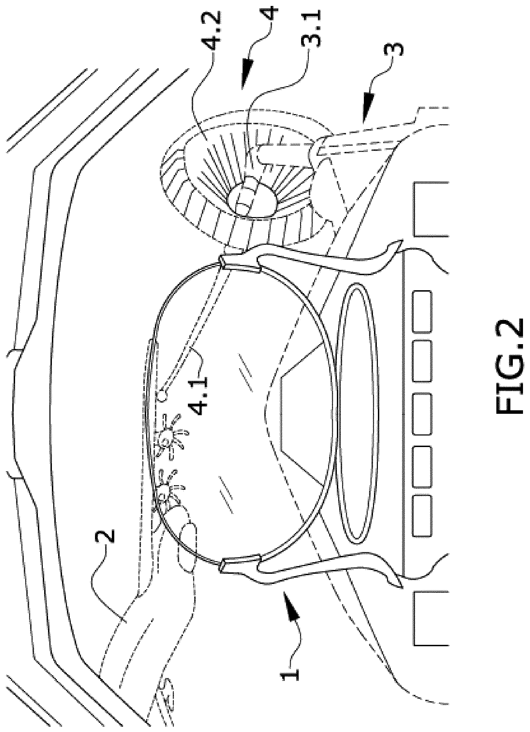

Figures 1 and 2 disclose a captured image depicting a portion of the receiver aircraft (1) which is to be refuelled by the tanker aircraft (2). The receiver aircraft (1) comprises the fuel receiving equipment (3) and the tanker aircraft (2) comprises the fuel dispensing equipment (4). In the embodiment shown in the figures, the refuelling system is a hose-and-drogue system that comprises a flexible hose (4.1) that trails from the tanker aircraft (2) having a drogue (4.2) in a terminal portion of the hose (4.1). The receiving equipment (3) comprises a probe (3.1) located on the receiver aircraft (1).

The vision system captures images of the portion of the receiver aircraft (1) comprising the fuel receiving equipment (3) and of the surroundings of the receiver aircraft (1) comprising at least a portion of the tanker aircraft (2) and the dispensing equipment (4).

The image processing system receives the images captured by the vision system and processes them to identify the shape of the fuel receiving equipment (3) and of the fuel dispensing equipment (4). This is seen in figures 1 and 2 in dotted lines. The image processing system also identifies the contour of a portion of the tanker aircraft (2). Additionally, in the shown embodiment it identifies the contour of a portion of the receiver aircraft (1).

The image processing system calculates the relative distance between the fuel dispensing equipment (4) and the fuel receiving equipment (3). In an embodiment, the relative distance between the fuel dispensing equipment (4) and the fuel receiving equipment (3) is configured to be calculated by the distance in an appropriate coordinate system, for instance, a cartesian coordinate system, between a coupling area of the fuel receiving equipment (3) and a coupling area of the fuel dispensing equipment (4). The coupling area is the area where both elements (3, 4) are coupled together for fuel transfer.

In an embodiment, the image processing system calculates the distance between the center of the drogue (4.2) and the probe (3.1).

The receiver aircraft positioning system varies, based on the distance between the fuel receiving equipment (3) and the fuel dispensing equipment (4) and the attitude of the tanker aircraft (2), flight parameters of the receiver aircraft (1) for approaching and aligning the receiver aircraft (1) to the tanker aircraft (2) so that the fuel dispensing equipment (4) and the fuel receiving equipment (3) make and maintain contact for performing a refuelling operation.

The flight parameters of the receiver aircraft (1) may be height, lateral displacement and/or engine thrust.

All the relative position calculations would be converted to the reference system required by the flight control system to control the aircraft's horizontal, vertical and longitudinal degrees of freedom.

In an embodiment, the system for autonomous air-to-air refuelling of an aircraft comprises an opening and closing system of the fuel receiving equipment (3) configured for opening the fuel receiving equipment (3) according to a valid preset distance between the fuel receiving equipment (3) and the fuel dispensing equipment (4) and on the relative attitude of the tanker aircraft (2). Said valid preset distance indicates that all the conditions needed to do the contact, such as the receiver aircraft (1) being within the refuelling range and the appropriate relative distance between the two elements, have been fulfilled.

Additionally, the opening and closing system of the fuel receiving equipment (3) may comprise a fuel weight measurement system and is configured for closing the fuel receiving equipment (3) at a valid preset fuel weight of the receiver aircraft (1). Controlling the valid preset fuel weight of the receiver aircraft (1) is possible to control the fuel that has been transferred.

In an embodiment, the fuel dispensing equipment (4) comprises visual signals indicating that the receiver aircraft (1) is located in an optimum refuelling zone with respect to the tanker aircraft (2). The image processing system is configured for identifying in the captured images the visual signals and the receiver aircraft positioning system is configured to vary the flight parameters of the receiver aircraft (1) also according to the identified visual signals so as to enter or keeping the receiver aircraft (1) in the refuelling range or to prevent the contact or command the receiver aircraft (1) disconnection in case of any abnormal situation during the operation arises.

In another embodiment, the opening and closing system of the fuel receiving equipment (3) is additionally configured for opening and closing the fuel receiving equipment (3) based on the identified visual signals.

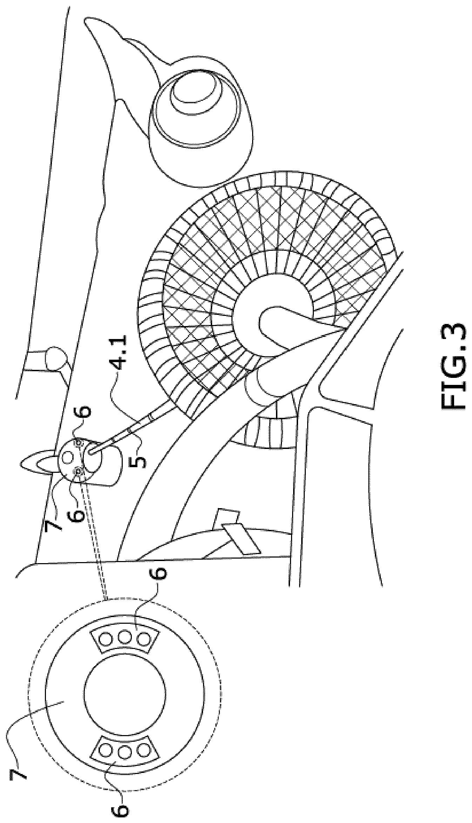

The visual signals may be visual marks (5) located on a deployable part of the fuel dispensing equipment (4), for instance, on the hose (4.1) or on the telescopic boom. This is depicted in figure 3.

The hose (4.1) allows the receiver aircraft (1) and the tanker aircraft (2) to readily determine the deployed hose (4.1) length and position within the refuelling range. Historically hose (4.1) visual marks (5) every ten feet have been used.

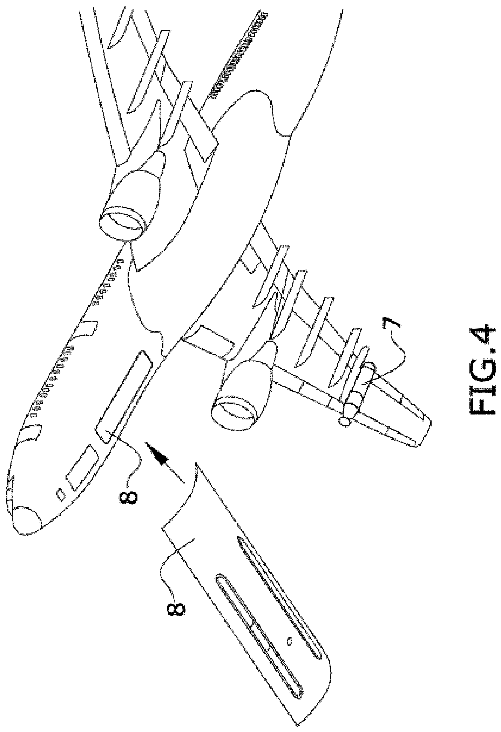

Alternatively, or additionally, the visual signals may be signal lights (6) located in the fuel dispensing equipment (4), for instance, in a pod (7). Another option is Pilot Director Lights (8) located on the belly fairing of the tanker aircraft (2) as shown in figure 4.

In an embodiment, the vision system comprises one or more cameras arranged on the receiver aircraft (1). The camera or cameras may be located inside the receiver aircraft (1) cabin or in the front part of the fuselage of the receiver aircraft (1) within a fairing. Cameras are able to operate in day and night conditions.

The image processing system comprises a data base of shapes of tanker aircraft (2), of fuel dispensing equipment (4) and of fuel receiving equipment (3) and compares the captured images with the shapes in the database so as to identify the fuel dispensing equipment (4), the fuel receiving equipment (3) and the tanker aircraft (2).

According to the above, the method for autonomous air-to-air refuelling of an aircraft during the different stages of air-to-air refuelling operation comprises the following steps:
- Capturing images by the vision system arranged on the receiver aircraft (1) of at least a portion of the receiver aircraft (1) comprising the fuel receiving equipment (3) and at least a portion of the surroundings of the receiver aircraft (1) as depicted in figures 1 and 2.
- Sending the captured images to a processing system arranged on the receiver aircraft (1).
- Processing the received captured images by the image processing system identifying the contour of at least a portion of the tanker aircraft (2), the shape of the fuel receiving equipment (3) and of the fuel dispensing equipment (4) and calculating the relative distance between the fuel dispensing equipment (4) and the fuel receiving equipment (3) and the relative attitude of the tanker aircraft (2) with respect to the receiver aircraft (2).
- Varying, based on the distance between the fuel receiving equipment (3) and the fuel dispensing equipment (4) and the relative attitude of the tanker aircraft (2), flight parameters of the receiver aircraft (1) by a receiver aircraft positioning system in communication with the image processing system for approaching and aligning the receiver aircraft (1) with the tanker aircraft (2) so that the fuel dispensing equipment (4) and the fuel receiving equipment (3) make and maintain contact for performing a refuelling operation.

In an embodiment, the method further comprises the step of opening and closing the fuel receiving equipment (3) for starting and stopping the refuelling by the opening and closing system of the fuel receiving equipment (3) based on the preset relative distance between the fuel receiving equipment (3) and the fuel dispensing equipment (4) and on the relative attitude of the tanker aircraft (2).

In an embodiment, the fuel dispensing equipment (4) comprises visual signals indicating that the receiver aircraft (1) is located in an optimum refuelling zone with respect to the tanker aircraft (2) and the method comprises the steps of:
- identifying in the captured images the visual signals by the image processing system, and
- varying the flight parameters of the receiver aircraft (1) and, optionally, opening and closing the fuel receiving equipment (3), also according to the identified visual signals.

According to the different phases, the method may comprise the following steps:
- a precontact phase in which the image processing system identifies the shape of the fuel receiving equipment (3), the fuel dispensing equipment (4) and the contour of at least a portion of the tanker aircraft (2) and calculates the relative distance between the fuel dispensing equipment (4) and the fuel receiving equipment (3) and the relative attitude of the tanker aircraft (2) with respect to the receiver aircraft (1), the receiver aircraft positioning system varies on the basis of the distance between the fuel receiving equipment (3) and the fuel dispensing equipment (4) and the relative attitude of the tanker aircraft (2), flight parameters of the receiver aircraft (1) for approaching and aligning the fuel dispensing equipment (4) and the fuel receiving equipment (3),
- a contact phase in which the image processing system identifies the visual signals, the shape of the fuel receiving equipment (3), the fuel dispensing equipment (4) and the contour of at least a portion of the tanker aircraft (2), and the receiver aircraft positioning system varies, based on the distance between the fuel receiving equipment (3) and the fuel dispensing equipment (4), the relative attitude of the tanker aircraft (2), the contour of the tanker aircraft (2) and the identified visual signals, flight parameters of the receiver aircraft (1) for fine or precise approaching and aligning the fuel dispensing equipment (4) and the fuel receiving equipment (3) so as to perform contact,
- a fuel transfer phase, the image processing system identifying the visual signals, the tanker aircraft (2) contour, the shape of the dispensing equipment (4) and of the receiving equipment (3) and the receiver aircraft (1) positioning system keeping, based on the identified visual signals, flight parameters of the receiver aircraft (1) for performing fuel transfer and the opening and closing system of the fuel receiving equipment (3) opening the fuel receiving equipment (3) for starting and performing the refuelling,
- a disengagement phase, the opening and closing system of the fuel receiving equipment (3) comprising a fuel weight measurement system and closing the fuel receiving equipment (3) for stopping refuelling from a valid preset fuel weight of the receiver aircraft (1) or based on the visual signals and the receiver aircraft positioning system varying, based on the opening and closing system of the fuel receiving equipment (3) or on the visual signals, flight parameters of the receiver aircraft (1) for disengagement.

In the embodiment shown in the figures, the contact phase control loop will be then allowed by the system based on the tanker drogue (4.2) versus receiver probe (3.1) position and signal lights status (AMBER), drogue stability and critical interface systems health status.

Drogue stability is detected when the position of the drogue is oscillating below a certain range and rate versus certain reference points such as tanker aircraft (2) contour.

Once the contact is confirmed, the system will start controlling the relative position between tanker aircraft (2) versus receiver aircraft (1) to maintain the receiver aircraft (1) within the refuelling range based on hose (4.1) marks and GREEN signal light image data.

Also, the availability/integrity of the flight control system would be identified and verified. In addition, if it has any degradation that does not allow the control of the vertical/horizontal position of the aircraft, the availability of the auto thrust mode of the engine power control or also the availability of the fuel system, for example in case of not having the fuel quantity computation available, then the system will not allow the contact to be made or will abort current contact if separation is considered to meet secure conditions.

Once dispense is finished, i.e., fuel target is achieved or any abnormal situation needing to stop the operation arises, necessary commands to close the fuel receipt valves of the fuel system and to the Flight Control and Guidance System to reduce the speed and start disconnection phase will be transmitted. Drogue (4.2) and probe (3.1) are disengaged, and receiver aircraft (1) exit the contact position.

## Claims

1. System for autonomous air-to-air refuelling of an aircraft, the system configured for being arranged on a receiver aircraft (1) adapted to be refuelled by a tanker aircraft (2), the receiver aircraft (1) comprising a fuel receiving equipment (3) and the tanker aircraft (2) comprising a fuel dispensing equipment (4), the fuel receiving equipment (3) being configured for receiving fuel from the fuel dispensing equipment (4), the system for autonomous air-to-air refuelling of an aircraft comprising:
- a vision system configured for being arranged on the receiver aircraft (1) and configured for capturing images of at least a portion of the receiver aircraft (1) comprising the fuel receiving equipment (3) and at least a portion of the tanker aircraft (2) comprising the dispensing equipment (4),
- an image processing system configured for being arranged on the receiver aircraft (1) and configured for receiving the images captured by the vision system and configured for processing said received images to identify the shape of the fuel receiving equipment (3), of the fuel dispensing equipment (4) and the contour of at least a portion of the tanker aircraft (2) and configured to calculate the distance between the fuel dispensing equipment (4) and the fuel receiving equipment (3) and the relative attitude of the tanker aircraft (2) with respect to the receiver aircraft (2),
- a receiver aircraft positioning system in communication with the image processing system and configured for varying, based on the distance between the fuel receiving equipment (3) and the fuel dispensing equipment (4) and the relative attitude of the tanker aircraft (2), flight parameters of the receiver aircraft (1) for approaching and aligning the receiver aircraft (1) with the tanker aircraft (2) so that the fuel dispensing equipment (4) and the fuel receiving equipment (3) make contact, maintain contact or disconnect for performing a refuelling operation.

2. System for autonomous air-to-air refuelling of an aircraft, according to claim 1, wherein it further comprises an opening and closing system of the fuel receiving equipment (3) configured for opening and closing the fuel receiving equipment (3) for starting and stopping the refuelling based on a preset relative distance between the fuel receiving equipment (3) and the fuel dispensing equipment (4) and on the relative attitude of the tanker aircraft (2).

3. System for autonomous air-to-air refuelling of an aircraft, according to claim 2, wherein the opening and closing system of the fuel receiving equipment (3) comprises a fuel weight measurement system and is configured for closing the fuel receiving equipment (3) for stopping refuelling from a valid preset fuel weight of the receiver aircraft (1) measured by the fuel weight measurement system.

4. System for autonomous air-to-air refuelling of an aircraft, according to any preceding claim, the fuel dispensing equipment (4) comprising visual signals configured for indicating when the receiver aircraft (1) is located in an optimum refuelling zone with respect to the tanker aircraft (2), wherein the image processing system is configured for identifying in the captured images the visual signals of the fuel dispensing equipment (4) and the receiver aircraft positioning system is configured to vary flight parameters of the receiver aircraft (1) according to the identified visual signals.

5. System for autonomous air-to-air refuelling of an aircraft, according to claim 3 and 4, wherein the opening and closing system of the fuel receiving equipment (3) is additionally configured for opening and closing the fuel receiving equipment (3) based on the identified visual signals.

6. System for autonomous air-to-air refuelling of an aircraft, according to any preceding claim, wherein the vision system comprises one or more cameras arranged on the receiver aircraft (1).

7. System for autonomous air-to-air refuelling of an aircraft, according to any preceding claim, wherein the image processing system comprises a data base of shapes of the portion of the tanker aircraft (2), the fuel dispensing equipment (4) and the fuel receiving equipment (3) and is configured to compare the captured images with the shapes in the database so as to identify the fuel dispensing equipment (4), the fuel receiving equipment (3) and the tanker aircraft (2).

8. System for autonomous air-to-air refuelling of an aircraft, according to any preceding claim, wherein the flight parameters of the receiver aircraft (1) are height, lateral displacement and/or engine thrust.

9. System for autonomous air-to-air refuelling of an aircraft, according to any preceding claim, wherein the relative distance between the fuel dispensing equipment (4) and the fuel receiving equipment (3) is configured to be calculated by the image processing system by the distance in an appropriate coordinate system between a coupling area of the fuel receiving equipment (3) and a coupling area of the fuel dispensing equipment (4).

10. Receiver aircraft (1) adapted to be refuelled by a tanker aircraft (2), the receiver aircraft (1) comprising a fuel receiving equipment (3) and the tanker aircraft comprising a fuel dispensing equipment (4), the fuel receiving equipment (3) being configured for receiving fuel from the fuel dispensing equipment (4), the receiver aircraft (1) **characterized in that** it comprises a system for autonomous air-to-air refuelling of an aircraft according to any preceding claim.

11. Receiver aircraft (1) adapted to be refuelled by a tanker aircraft (2), according to claim 10, wherein it comprises the camera or cameras located inside the receiver aircraft (1) cabin or within a fairing in the front part of a fuselage of the receiver aircraft (1).

12. Method for autonomous air-to-air refuelling of a receiver aircraft (1) adapted to be refuelled by a tanker aircraft (2), the receiver aircraft (1) comprising a fuel receiving equipment (3) and the tanker aircraft comprising a fuel dispensing equipment (4), the fuel receiving equipment (3) being configured for receiving fuel from the fuel dispensing equipment (4), the method for autonomous air-to-air refuelling of a receiver aircraft (1) comprising the following steps:
- capturing images by a vision system arranged on the receiver aircraft (1) of at least a portion of the receiver aircraft (1) comprising the fuel receiving equipment (3) and at least a portion of the tanker aircraft (2) comprising the dispensing equipment (4),
- sending the captured images to an image processing system arranged on the receiver aircraft (1),
- processing the received captured images by the image processing system identifying the shape of the fuel receiving equipment (3), of the fuel dispensing equipment (4) and of the contour of at least a portion of the tanker aircraft (2) and calculating the distance between the fuel dispensing equipment (4) and the fuel receiving equipment (3) and the relative attitude of the tanker aircraft (2) with respect to the receiver aircraft (2),
- varying, based on the distance between the fuel receiving equipment (3) and the fuel dispensing equipment (4) and the relative attitude of the tanker aircraft (2), flight parameters of the receiver aircraft (1) by a receiver aircraft positioning system in communication with the image processing system for approaching and aligning the receiver aircraft (1) with the tanker aircraft (2) so that the fuel dispensing equipment (4) and the fuel receiving equipment (3) make contact, maintain contact or disconnect for performing a refuelling operation.

13. Method for autonomous air-to-air refuelling of an aircraft, according to claim 12, wherein it further comprises the step of opening and closing the fuel receiving equipment (3) for starting and stopping the refuelling by an opening and closing system of the fuel receiving equipment (3) based on a preset relative distance between the fuel receiving equipment (3) and the fuel dispensing equipment (4) and on the relative attitude of the tanker aircraft (2).

14. Method for autonomous air-to-air refuelling of a receiver aircraft, according to claim 13, wherein it comprises the following phases:
- a precontact phase, the image processing system identifying the shape of the fuel receiving equipment (3), of the fuel dispensing equipment (4) and of the contour of at least a portion of the tanker aircraft (2) and calculating the relative distance between the fuel dispensing equipment (4) and the fuel receiving equipment (3) and the relative attitude of the tanker aircraft (2) with respect to the receiver aircraft (1), the receiver aircraft positioning system varying on the basis of the distance between the fuel receiving equipment (3) and the fuel dispensing equipment (4) and the relative attitude of the tanker aircraft (2), flight parameters of the receiver aircraft (1) for approaching and aligning the fuel dispensing equipment (4) and the fuel receiving equipment (3),
- a contact phase, the fuel dispensing equipment (4) comprising visual signals configured for indicating when the receiver aircraft (1) is located in an optimum refuelling zone with respect to the tanker aircraft (2), the image processing system identifying in the captured images the visual signals, the tanker aircraft (2) contour, the shape of the dispensing equipment (4) and of the receiving equipment (3) and the receiver aircraft positioning system varying, based on the distance between the fuel receiving equipment (3) and the fuel dispensing equipment (4), the relative attitude of the tanker aircraft (2), the contour of the tanker aircraft (2) and the identified visual signals, flight parameters of the receiver aircraft (1) for fine approaching and aligning the fuel dispensing equipment (4) and the fuel receiving equipment (3) so as to perform contact,
- a fuel transfer phase, the image processing system identifying the visual signals, the tanker aircraft (2) contour, the shape of the dispensing equipment (4) and of the receiving equipment (3) and the receiver aircraft (1) positioning system keeping, based on the identified visual signals, flight parameters of the receiver aircraft (1) for performing fuel transfer and the opening and closing system of the fuel receiving equipment (3) opening the fuel receiving equipment (3) for starting and performing the refuelling,
- a disengagement phase, the opening and closing system of the fuel receiving equipment (3) comprising a fuel weight measurement system and closing the fuel receiving equipment (3) for stopping refuelling from a valid preset fuel weight of the receiver aircraft (1) or based on the visual signals and the receiver aircraft positioning system varying, based on the opening and closing system of the fuel receiving equipment (3) or on the visual signals, flight parameters of the receiver aircraft (1) for disengagement.

## Patentansprüche

1. System zur autonomen Luft-Luft-Betankung eines Flugzeugs, wobei das System ausgelegt ist, um auf einem Empfängerflugzeug (1) angeordnet zu werden, das geeignet ist, um von einem Tankflugzeug (2) betankt zu werden, wobei das Empfängerflugzeug (1) eine Kraftstoffempfangseinrichtung (3) umfasst und das Tankflugzeug (2) eine Kraftstoffabgabeeinrichtung (4) umfasst, wobei die Kraftstoffempfangseinrichtung (3) ausgelegt ist, um Kraftstoff von der Kraftstoffabgabeeinrichtung (4) zu empfangen, wobei das System zur autonomen Luft-Luft-Betankung eines Flugzeugs Folgendes umfasst:
ein Sichtsystem, das ausgelegt ist, um auf dem Empfängerflugzeug (1) angeordnet zu werden, und zum Erfassen von Bildern von mindestens einem Abschnitt des Empfängerflugzeugs (1) ausgelegt ist, umfassend die Kraftstoffempfangseinrichtung (3), und mindestens einem Abschnitt des Tankflugzeugs (2), umfassend die Abgabeeinrichtung (4),
ein Bildverarbeitungssystem, das ausgelegt ist, um auf dem Empfängerflugzeug (1) angeordnet zu werden, und zum Empfangen der von dem Sichtsystem erfassten Bilder ausgelegt ist, und zum Verarbeiten der empfangenen Bilderausgelegt ist, um die Form der Kraftstoffempfangseinrichtung (3), der Kraftstoffabgabeeinrichtung (4) und die Kontur von mindestens einem Abschnitt des Tankflugzeugs (2) zu identifizieren, und ausgelegt ist, um den Abstand zwischen der Kraftstoffabgabeeinrichtung (4) und der Kraftstoffempfangseinrichtung (3) und die relative Lage des Tankflugzeugs (2) in Bezug auf das Empfängerflugzeug (2) zu berechnen,
ein Empfängerflugzeug-Positionierungssystem in Kommunikation mit dem Bildverarbeitungssystem und ausgelegt, um basierend auf dem Abstand zwischen der Kraftstoffempfangseinrichtung (3) und der Kraftstoffabgabeeinrichtung (4) und der relativen Lage des Tankflugzeugs (2) Flugparameter des Empfängerflugzeugs (1) zu variieren, um das Empfängerflugzeug (1) dem Tankflugzeug (2) zu nähern und auf dieses auszurichten, sodass die Kraftstoffabgabeeinrichtung (4) und die Kraftstoffempfangseinrichtung (3) in Kontakt kommen, den Kontakt aufrechterhalten oder sich trennen, um einen Betankungsvorgang durchzuführen.

2. System zur autonomen Luft-Luft-Betankung eines Flugzeugs nach Anspruch 1, wobei es ferner ein Öffnungs- und Schließsystem der Kraftstoffempfangseinrichtung (3) umfasst, das zum Öffnen und Schließen der Kraftstoffempfangseinrichtung (3) ausgelegt ist, um die Betankung basierend auf einem voreingestellten relativen Abstand zwischen der Kraftstoffempfangseinrichtung (3) und der Kraftstoffabgabeeinrichtung (4) sowie der relativen Lage des Tankflugzeugs (2) zu starten und zu stoppen.

3. System zur autonomen Luft-Luft-Betankung eines Flugzeugs nach Anspruch 2, wobei das Öffnungs- und Schließsystem der Kraftstoffempfangseinrichtung (3) ein Kraftstoffgewichtsmesssystem umfasst und zum Schließen der Kraftstoffempfangseinrichtung (3) ausgelegt ist, um die Betankung ab einem von dem Kraftstoffgewichtsmesssystem gemessenen gültigen voreingestellten Kraftstoffgewicht des Empfängerflugzeugs (1) zu stoppen.

4. System zur autonomen Luft-Luft-Betankung eines Flugzeugs nach einem der vorhergehenden Ansprüche, wobei die Kraftstoffabgabeeinrichtung (4) visuelle Signale umfasst, die zum Angeben, wann sich das Empfängerflugzeug (1) in einer optimalen Betankungszone in Bezug auf das Tankflugzeug (2) befindet ausgelegt sind, wobei das Bildverarbeitungssystem zum Identifizieren der in den erfassten Bildern visuellen Signale der Kraftstoffabgabeeinrichtung (4) ausgelegt ist, und das Empfängerflugzeug-Positionierungssystem ausgelegt ist, um Flugparameter des Empfängerflugzeugs (1) gemäß den identifizierten visuellen Signalen zu variieren.

5. System zur autonomen Luft-Luft-Betankung eines Flugzeugs nach Anspruch 3 und 4, wobei das Öffnungs- und Schließsystem der Kraftstoffempfangseinrichtung (3) zusätzlich zum Öffnen und Schließen der Kraftstoffempfangseinrichtung (3) basierend auf den identifizierten visuellen Signalen ausgelegt ist.

6. System zur autonomen Luft-Luft-Betankung eines Flugzeugs nach einem der vorhergehenden Ansprüche, wobei das Sichtsystem eine oder mehrere Kameras umfasst, die auf dem Empfängerflugzeug (1) angeordnet sind.

7. System zur autonomen Luft-Luft-Betankung eines Flugzeugs nach einem der vorhergehenden Ansprüche, wobei das Bildverarbeitungssystem eine Datenbank von Formen des Abschnitts des Tankflugzeugs (2), der Kraftstoffabgabeeinrichtung (4) und der Kraftstoffempfangseinrichtung (3) umfasst und ausgelegt ist, um die erfassten Bilder mit den Formen in der Datenbank zu vergleichen, um die Kraftstoffabgabeeinrichtung (4), die Kraftstoffempfangseinrichtung (3) und das Tankflugzeug (2) zu identifizieren.

8. System zur autonomen Luft-Luft-Betankung eines Flugzeugs nach einem der vorhergehenden Ansprüche, wobei die Flugparameter des Empfängerflugzeugs (1) Höhe, seitlicher Versatz und/oder Triebwerksschub sind.

9. System zur autonomen Luft-Luft-Betankung eines Flugzeugs nach einem der vorhergehenden Ansprüche, wobei der relative Abstand zwischen der Kraftstoffabgabeeinrichtung (4) und der Kraftstoffempfangseinrichtung (3) ausgelegt ist, um von dem Bildverarbeitungssystem durch den Abstand in einem geeigneten Koordinatensystem zwischen einem Kopplungsbereich der Kraftstoffempfangseinrichtung (3) und einem Kopplungsbereich der Kraftstoffabgabeeinrichtung (4) berechnet zu werden.

10. Empfängerflugzeug (1), das geeignet ist, um von einem Tankflugzeug (2) betankt zu werden, wobei das Empfängerflugzeug (1) eine Kraftstoffempfangseinrichtung (3) umfasst und das Tankflugzeug eine Kraftstoffabgabeeinrichtung (4) umfasst, wobei die Kraftstoffempfangseinrichtung (3) zum Empfangen von Kraftstoff von der Kraftstoffabgabeeinrichtung (4) ausgelegt ist, wobei das Empfängerflugzeug (1) **dadurch gekennzeichnet ist, dass** es ein System zur autonomen Luft-Luft-Betankung eines Flugzeugs nach einem der vorhergehenden Ansprüche umfasst.

11. Empfängerflugzeug (1), das geeignet ist, um von einem Tankflugzeug (2) betankt zu werden, nach Anspruch 10, wobei es die Kamera oder Kameras umfasst, die sich in der Kabine des Empfängerflugzeugs (1) oder in einer Verkleidung in dem vorderen Teil eines Rumpfs des Empfängerflugzeugs (1) befinden.

12. Verfahren zur autonomen Luft-Luft-Betankung eines Empfängerflugzeugs (1), das geeignet ist, um von einem Tankflugzeug (2) betankt zu werden, wobei das Empfängerflugzeug (1) eine Kraftstoffempfangseinrichtung (3) umfasst und das Tankflugzeug eine Kraftstoffabgabeeinrichtung (4) umfasst, wobei die Kraftstoffempfangseinrichtung (3) zum Empfangen von Kraftstoff von der Kraftstoffabgabeeinrichtung (4) ausgelegt ist, wobei das Verfahren zur autonomen Luft-Luft-Betankung eines Empfängerflugzeugs (1) die folgenden Schritte umfasst:
Erfassen von Bildern von mindestens einem Abschnitt des Empfängerflugzeugs (1), umfassend die Kraftstoffempfangseinrichtung (3), und mindestens einem Abschnitt des Tankflugzeugs (2), umfassend die Abgabeeinrichtung (4), durch ein auf dem Empfängerflugzeug (1) angeordnetes Sichtsystem,
Senden der erfassten Bilder an ein Bildverarbeitungssystem, das auf dem Empfängerflugzeug (1) angeordnet ist,
Verarbeiten der empfangenen, erfassten Bilder durch das Bildverarbeitungssystem, das die Form der Kraftstoffempfangseinrichtung (3), der Kraftstoffabgabeeinrichtung (4) und der Kontur von mindestens einem Abschnitt des Tankflugzeugs (2) identifiziert und den Abstand zwischen der Kraftstoffabgabeeinrichtung (4) und der Kraftstoffempfangseinrichtung (3) und der relativen Lage des Tankflugzeugs (2) in Bezug auf das Empfängerflugzeug (2) berechnet,
Variieren, basierend auf dem Abstand zwischen der Kraftstoffempfangseinrichtung (3) und der Kraftstoffabgabeeinrichtung (4) und der relativen Lage des Tankflugzeugs (2) von Flugparametern des Empfängerflugzeugs (1) durch ein Empfängerflugzeug-Positionierungssystem in Kommunikation mit dem Bildverarbeitungssystem, um das Empfängerflugzeug (1) dem Tankflugzeug (2) anzunähern und auf dieses auszurichten, sodass die Kraftstoffabgabeeinrichtung (4) und die Kraftstoffempfangseinrichtung (3) in Kontakt kommen, den Kontakt aufrechterhalten oder sich trennen, um einen Betankungsvorgang durchzuführen.

13. Verfahren zur autonomen Luft-Luft-Betankung eines Flugzeugs nach Anspruch 12, wobei dieses ferner den Schritt des Öffnen und Schließen der Kraftstoffempfangseinrichtung (3) umfasst, um die Betankung durch ein Öffnungs- und Schließsystem der Kraftstoffempfangseinrichtung (3) basierend auf einem voreingestellten relativen Abstand zwischen der Kraftstoffempfangseinrichtung (3) und der Kraftstoffabgabeeinrichtung (4) sowie der relativen Lage des Tankflugzeugs (2) zu starten und zu stoppen.

14. Verfahren zur autonomen Luft-Luft-Betankung eines Empfängerflugzeugs nach Anspruch 13, wobei dieses die folgenden Phasen umfasst:
eine Vorkontaktphase, in der das Bildverarbeitungssystem die Form der Kraftstoffempfangseinrichtung (3), der Kraftstoffabgabeeinrichtung (4) und der Kontur von mindestens einem Abschnitt des Tankflugzeugs (2) identifiziert und den relativen Abstand zwischen der Kraftstoffabgabeeinrichtung (4) und der Kraftstoffempfangseinrichtung (3) sowie die relative Lage des Tankflugzeugs (2) in Bezug auf das Empfängerflugzeug (1) berechnet und das Empfängerflugzeug-Positionierungssystem auf der Grundlage des Abstands zwischen der Kraftstoffempfangseinrichtung (3) und der Kraftstoffabgabeeinrichtung (4) und der relativen Lage des Tankflugzeugs (2) Flugparameter des Empfängerflugzeugs (1) zum Annähern und Ausrichten der Kraftstoffabgabeeinrichtung (4) und der Kraftstoffempfangseinrichtung (3) variiert,
eine Kontaktphase, in der die Kraftstoffabgabeeinrichtung (4) visuelle Signale umfasst, die ausgelegt sind, um anzugeben, wann sich das Empfängerflugzeug (1) in einer optimalen Betankungszone in Bezug auf das Tankflugzeug (2) befindet, und das Bildverarbeitungssystem in den erfassten Bildern die visuellen Signale, die Kontur des Tankflugzeugs (2), die Form der Abgabeeinrichtung (4) und der Empfangseinrichtung (3) identifiziert und das Empfängerflugzeug-Positionierungssystem basierend auf dem Abstand zwischen der Kraftstoffempfangseinrichtung (3) und der Kraftstoffabgabeeinrichtung (4), der relativen Lage des Tankflugzeugs (2), der Kontur des Tankflugzeugs (2) und der identifizierten visuellen Signale Flugparameter des Empfängerflugzeugs (1) zum Feinannähern und -ausrichten der Kraftstoffabgabeeinrichtung (4) und der Kraftstoffempfangseinrichtung (3) variiert, um den Kontakt durchzuführen,
eine Kraftstofftransferphase, in der das Bildverarbeitungssystem die visuellen Signale, die Kontur des Tankflugzeugs (2), die Form der Abgabeeinrichtung (4) und der Empfangseinrichtung (3) identifiziert und das Positionierungssystem des Empfängerflugzeugs (1) basierend auf den identifizierten visuellen Signalen Flugparameter des Empfängerflugzeugs (1) aufrechterhält, um den Kraftstofftransfer durchzuführen, und das Öffnungs- und Schließsystem der Kraftstoffempfangseinrichtung (3) die Kraftstoffempfangseinrichtung (3) öffnet, um die Betankung zu starten und durchzuführen,
eine Abkoppelphase, in der das Öffnungs- und Schließsystem der Kraftstoffempfangseinrichtung (3) ein Kraftstoffgewichtsmesssystem umfasst und die Kraftstoffempfangseinrichtung (3) schließt, um die Betankung ab einem gültigen voreingestellten Kraftstoffgewicht des Empfängerflugzeugs (1) oder basierend auf den visuellen Signalen zu stoppen, und das Empfängerflugzeug-Positionierungssystem basierend auf dem Öffnungs- und Schließsystem der Kraftstoffempfangseinrichtung (3) oder den visuellen Signalen Flugparameter des Empfängerflugzeugs (1) zum Abkoppeln variiert.

## Revendications

1. Système de ravitaillement en vol autonome d'un aéronef, le système étant configuré pour être disposé sur un aéronef récepteur (1) apte à être ravitaillé par un aéronef ravitailleur (2), l'aéronef récepteur (1) comprenant un équipement de réception de carburant (3) et l'aéronef ravitailleur (2) comprenant un équipement de distribution de carburant (4), l'équipement de réception de carburant (3) étant configuré pour recevoir du carburant de l'équipement de distribution de carburant (4), le système de ravitaillement en vol autonome d'un aéronef comprenant :
- un système de vision configuré pour être disposé sur l'aéronef récepteur (1) et configuré pour capturer des images d'au moins une partie de l'aéronef récepteur (1) comprenant l'équipement de réception de carburant (3) et d'au moins une partie de l'aéronef ravitailleur (2) comprenant l'équipement de distribution (4),
- un système de traitement d'images configuré pour être disposé sur l'aéronef récepteur (1) et configuré pour recevoir les images capturées par le système de vision et configuré pour traiter lesdites images reçues afin d'identifier la forme de l'équipement de réception de carburant (3), de l'équipement de distribution de carburant (4) et le contour d'au moins une partie de l'aéronef ravitailleur (2) et configuré pour calculer la distance entre l'équipement de distribution de carburant (4) et l'équipement de réception de carburant (3) et l'attitude relative de l'aéronef ravitailleur (2) par rapport à l'aéronef récepteur (2),
- un système de positionnement d'aéronef récepteur en communication avec le système de traitement d'images et configuré pour faire varier, en fonction de la distance entre l'équipement de réception de carburant (3) et l'équipement de distribution de carburant (4) et de l'attitude relative de l'aéronef ravitailleur (2), les paramètres de vol de l'aéronef récepteur (1) afin d'approcher et aligner l'aéronef récepteur (1) avec l'aéronef ravitailleur (2) de sorte que l'équipement de distribution de carburant (4) et l'équipement de réception de carburant (3) entrent en contact, maintiennent le contact ou se déconnectent pour effectuer une opération de ravitaillement.

2. Système de ravitaillement en vol autonome d'un aéronef, selon la revendication 1, dans lequel il comprend en outre un système d'ouverture et de fermeture de l'équipement de réception de carburant (3) configuré pour ouvrir et fermer l'équipement de réception de carburant (3) afin de démarrer et d'arrêter le ravitaillement en fonction d'une distance relative prédéfinie entre l'équipement de réception de carburant (3) et l'équipement de distribution de carburant (4) et de l'attitude relative de l'aéronef ravitailleur (2).

3. Système de ravitaillement en vol autonome d'un aéronef, selon la revendication 2, dans lequel le système d'ouverture et de fermeture de l'équipement de réception de carburant (3) comprend un système de mesure de la masse de carburant et est configuré pour fermer l'équipement de réception de carburant (3) afin d'arrêter le ravitaillement à partir afin d'arrêter de l'aéronef récepteur (1) mesurée par le système de mesure de la masse de carburant.

4. Système de ravitaillement en vol autonome d'un aéronef, selon l'une quelconque des revendications précédentes, l'équipement de distribution de carburant (4) comprenant des signaux visuels configurés pour indiquer lorsque l'aéronef récepteur (1) est situé dans une zone de ravitaillement optimale par rapport à l'aéronef ravitailleur (2), dans lequel le système de traitement d'images est configuré pour identifier, dans les images capturées, les signaux visuels de l'équipement de distribution de carburant (4) et le système de positionnement de l'aéronef récepteur est configuré pour faire varier les paramètres de vol de l'aéronef récepteur (1) en fonction des signaux visuels identifiés.

5. Système de ravitaillement en vol autonome d'un aéronef, selon les revendications 3 et 4, dans lequel le système d'ouverture et de fermeture de l'équipement de réception de carburant (3) est en outre configuré pour ouvrir et fermer l'équipement de réception de carburant (3) en fonction des signaux visuels identifiés.

6. Système de ravitaillement en vol autonome d'un aéronef, selon l'une quelconque des revendications précédentes, dans lequel le système de vision comprend une ou plusieurs caméras disposées sur l'aéronef récepteur (1).

7. Système de ravitaillement en vol autonome d'un aéronef, selon l'une quelconque des revendications précédentes, dans lequel le système de traitement d'images comprend une base de données de formes de la partie de l'aéronef ravitailleur (2), de l'équipement de distribution de carburant (4) et de l'équipement de réception de carburant (3) et est configuré pour comparer les images capturées aux formes de la base de données de manière à identifier l'équipement de distribution de carburant (4), l'équipement de réception de carburant (3) et l'aéronef ravitailleur (2).

8. Système de ravitaillement en vol autonome d'un aéronef, selon l'une quelconque des revendications précédentes, dans lequel les paramètres de vol de l'aéronef récepteur (1) sont la l'altitude, le déplacement latéral et/ou la poussée moteur.

9. Système de ravitaillement en vol autonome d'un aéronef selon l'une quelconque des revendications précédentes, dans lequel la distance relative entre l'équipement de distribution de carburant (4) et l'équipement de réception de carburant (3) est calculée par le système de traitement d'images en fonction de la distance, dans un système de coordonnées approprié, entre une zone d'accouplement de l'équipement de réception de carburant (3) et une zone d'accouplement de l'équipement de distribution de carburant (4).

10. Aéronef récepteur (1) adapté pour être ravitaillé par un aéronef ravitailleur (2), l'aéronef récepteur (1) comprenant un équipement de réception de carburant (3) et l'aéronef ravitailleur comprenant un équipement de distribution de carburant (4), l'équipement de réception de carburant (3) étant configuré pour recevoir du carburant de l'équipement de distribution de carburant (4), l'aéronef récepteur (1) étant **caractérisé en ce qu'**il comprend un système de ravitaillement en vol autonome d'un aéronef selon l'une quelconque des revendications précédentes.

11. Aéronef récepteur (1) adapté pour être ravitaillé par un aéronef ravitailleur (2), selon la revendication 10, dans lequel il comprend la ou les caméras situées à l'intérieur de la cabine de l'aéronef récepteur (1) ou à l'intérieur d'un carénage situé à l'avant d'un fuselage de l'aéronef récepteur (1).

12. Procédé de ravitaillement en vol autonome d'un aéronef récepteur (1) adapté pour être ravitaillé par un aéronef ravitailleur (2), l'aéronef récepteur (1) comprenant un équipement de réception de carburant (3) et l'aéronef ravitailleur comprenant un équipement de distribution de carburant (4), l'équipement de réception de carburant (3) étant configuré pour recevoir du carburant de l'équipement de distribution de carburant (4), le procédé de ravitaillement en vol autonome d'un aéronef récepteur (1) comprenant les étapes suivantes :
- capturer, par un système de vision disposé sur l'aéronef récepteur (1), des images d'au moins une partie de l'aéronef récepteur (1) comprenant l'équipement de réception de carburant (3) et d'au moins une partie de l'aéronef ravitailleur (2) comprenant l'équipement de distribution (4),
- envoyer les images capturées à un système de traitement d'images disposé sur l'aéronef récepteur (1),
- traiter des images capturées reçues par le système de traitement d'images de manière à identifier la forme de l'équipement de réception de carburant (3), de l'équipement de distribution de carburant (4) et du contour d'au moins une partie de l'aéronef ravitailleur (2), et calculer la distance entre l'équipement de distribution de carburant (4) et l'équipement de réception de carburant (3) et de l'attitude relative de l'aéronef ravitailleur (2) par rapport à l'aéronef récepteur (1),
- varier, en fonction de la distance entre l'équipement de réception de carburant (3) et l'équipement de distribution de carburant (4) et l'attitude relative de l'aéronef ravitailleur (2), des paramètres de vol de l'aéronef récepteur (1), par un système de positionnement de l'aéronef récepteur en communication avec le système de traitement d'images, afin d'approcher et d'aligner l'aéronef récepteur (1) avec l'aéronef ravitailleur (2) de sorte que l'équipement de distribution de carburant (4) et l'équipement de réception de carburant (3) entrent en contact, maintiennent le contact ou se déconnectent pour effectuer une opération de ravitaillement.

13. Procédé de ravitaillement en vol autonome d'un aéronef selon la revendication 12, comprenant en outre l'étape consistant à ouvrir et fermer l'équipement de réception de carburant (3) afin de démarrer et d'arrêter le ravitaillement, par un système d'ouverture et de fermeture de l'équipement de réception de carburant (3), en fonction d'une distance relative prédéfinie entre l'équipement de réception de carburant (3) et l'équipement de distribution de carburant (4) et de l'attitude relative de l'aéronef ravitailleur (2).

14. Procédé de ravitaillement en vol autonome d'un aéronef récepteur, selon la revendication 13, dans lequel il comprend les phases suivantes :
- une phase de pré-contact, le système de traitement d'images identifiant la forme de l'équipement de réception de carburant (3), de l'équipement de distribution de carburant (4) et du contour d'au moins une partie de l'aéronef ravitailleur (2) et calculant la distance relative entre l'équipement de distribution de carburant (4) et l'équipement de réception de carburant (3) et l'attitude relative de l'aéronef ravitailleur (2) par rapport à l'aéronef récepteur (1), le système de positionnement de l'aéronef récepteur faisant varier, en fonction de la distance entre l'équipement de réception de carburant (3) et l'équipement de distribution de carburant (4) et de l'attitude relative de l'avion ravitailleur (2), les paramètres de vol de l'aéronef récepteur (1) afin d'approcher et d'aligner l'équipement de distribution de carburant (4) et de l'équipement de réception de carburant (3),
- une phase de contact, l'équipement de distribution de carburant (4) comprenant des signaux visuels configurés pour indiquer lorsque l'aéronef récepteur (1) est situé dans une zone de ravitaillement optimale par rapport à l'aéronef ravitailleur (2), le système de traitement d'images identifiant, dans les images capturées, les signaux visuels, le contour de l'aéronef ravitailleur (2), la forme de l'équipement de distribution (4) et de l'équipement de réception (3), et le système de positionnement de l'aéronef récepteur faisant varier, en fonction de la distance, de l'attitude relative, du contour de l'aéronef ravitailleur (2) et des signaux visuels identifiés, les paramètres de vol de l'aéronef récepteur (1) afin d'effectuer un rapprochement et un alignement précis de l'équipement de distribution de carburant (4) et de l'équipement de réception de carburant (3) pour réaliser le contact,
- une phase de transfert de carburant, le système de traitement d'images identifiant les signaux visuels, le contour de l'aéronef ravitailleur (2), la forme de l'équipement de distribution (4) et de l'équipement de réception (3) et le système de positionnement de l'aéronef récepteur (1) maintenant, en fonction des signaux visuels identifiés, les paramètres de vol de l'aéronef récepteur (1) pour effectuer le transfert de carburant, et le système d'ouverture et de fermeture de l'équipement de réception de carburant (3) ouvrant l'équipement de réception de carburant (3) afin de démarrer et effectuer le ravitaillement,
- une phase de désengagement, le système d'ouverture et de fermeture de l'équipement de réception de carburant (3) comprenant un système de mesure de la masse de carburant, ferme l'équipement de réception de carburant (3) afin d'arrêter le ravitaillement à partir d'une valeur valide prédéfinie de masse de carburant de l'aéronef récepteur (1) ou en fonction des signaux visuels, et le système de positionnement de l'aéronef récepteur faisant varier, en fonction du système d'ouverture et de fermeture de l'équipement de réception de carburant (3) ou des signaux visuels, les paramètres de vol de l'aéronef récepteur (1) pour le désengagement.
